# DEMANDE DE BREVET EUROPEEN

(11) **EP 2 862 750 A1**
(43) Date de publication de la demande: **22.04.2015**
(21) Numéro de dépôt: 14189046.7
(22) Date de dépôt: 15.10.2014
(51) Int. Cl.: B60R 5/04

(54) **Système de recouvrement d'un compartiment à bagages de véhicule automobile**

(30) Priorité: 15.10.2013 FR 1360022
(71) Demandeur: CENTRE D'ETUDE ET DE RECHERCHE POUR L'AUTOMOBILE (CERA), 51100 Reims (FR)
(72) Inventeur: Lecomte, Alicia, 51220 Villers-Franqueux (FR); Guenamant, Nicolas, 08310 Machault (FR)
(74) Mandataire: Sayettat, Julien Christian

(57) **Abrégé**

L'invention concerne un système (1) de recouvrement d'un compartiment à bagages de véhicule automobile, ledit système comprenant une tablette (2) de recouvrement et deux ébénisteries (3) latérales de réception amovible de ladite tablette, ladite tablette comprenant au moins un volet (4) relevable en rotation selon son bord avant (5) entre une configuration d'utilisation, où il est sensiblement horizontal, et une configuration repliée permettant un accès facilité aux bagages, l'une desdites ébénisteries étant pourvue d'un dispositif (6) d'actionnement en rotation dudit volet dans un sens ou dans l'autre, ledit dispositif comprenant un moteur (7) électrique, ledit système étant :
• localisé en zone de réception d'un coin avant (8) dudit volet,
• agencé pour s'emboiter sur ladite tablette, quand elle est montée sur lesdites ébénisteries, de façon à pouvoir actionner en rotation ledit volet.

## Description

L'invention concerne un système de recouvrement d'un compartiment à bagages de véhicule automobile.

Il est connu de réaliser un système de recouvrement d'un compartiment à bagages de véhicule automobile, ledit système comprenant une tablette de recouvrement et deux ébénisteries latérales de réception amovible de ladite tablette, ladite tablette comprenant au moins un volet relevable en rotation selon son bord avant entre une configuration d'utilisation, où il est sensiblement horizontal, et une configuration repliée permettant un accès facilité aux bagages, l'une desdites ébénisteries étant pourvue d'un dispositif d'actionnement en rotation dudit volet dans un sens ou dans l'autre, ledit dispositif comprenant un moteur électrique.

Dans les agencements connus, le dispositif d'actionnement occupe une partie importante du compartiment à bagages, ledit dispositif comprenant par exemple des câbles de traction de l'arrière du volet vers le haut, et/ou encore des rails de guidage situés dans les ébénisteries ou montants de baie du véhicule.

Il en résulte une complexification du dispositif et des nuisances esthétiques.

L'invention a pour but de pallier cet inconvénient.

A cet effet, l'invention propose un système de recouvrement d'un compartiment à bagages de véhicule automobile, ledit système comprenant une tablette de recouvrement et deux ébénisteries latérales de réception amovible de ladite tablette, ladite tablette comprenant au moins un volet relevable en rotation selon son bord avant entre une configuration d'utilisation, où il est sensiblement horizontal, et une configuration repliée permettant un accès facilité aux bagages, l'une desdites ébénisteries étant pourvue d'un dispositif d'actionnement en rotation dudit volet dans un sens ou dans l'autre, ledit dispositif comprenant un moteur électrique, ledit dispositif :
- étant localisé en zone de réception d'un coin avant dudit volet,
- étant agencé pour s'emboiter sur ladite tablette, quand elle est montée sur lesdites ébénisteries, de façon à pouvoir actionner en rotation ledit volet.

Dans cette description, les termes de positionnement dans l'espace (haut, bas, transversal, latéral, avant, arrière, vertical, horizontal, ...) sont pris en référence à la tablette disposée dans le véhicule.

L'agencement proposé présente l'avantage d'offrir une très grande compacité, le dispositif d'actionnement étant localisé de façon très circonscrite dans le véhicule.

D'autres particularités et avantages de l'invention apparaîtront dans la description qui suit, faite en référence aux figures jointes, dans lesquelles :

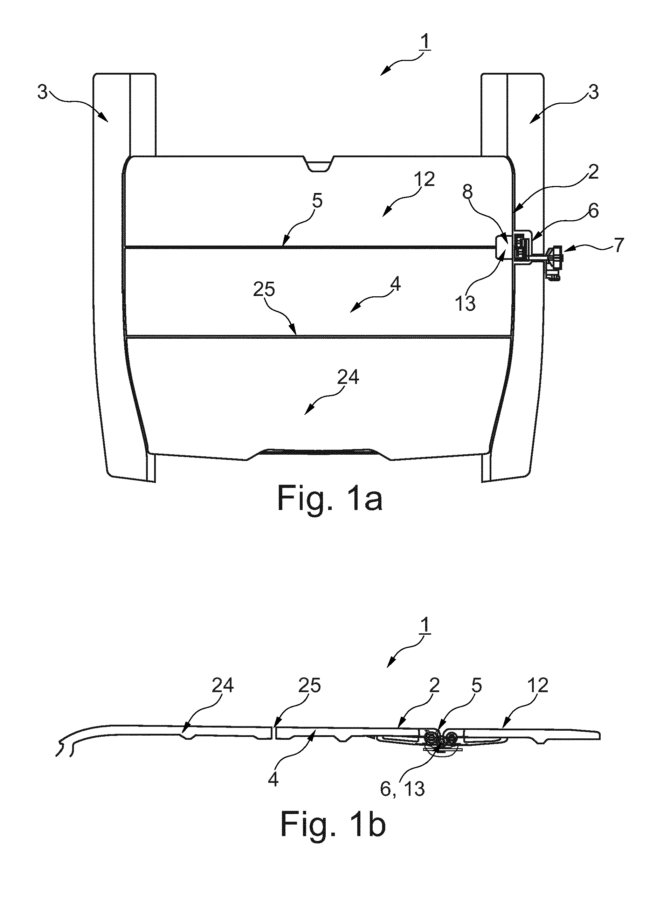

- les figures 1 sont des vues générales de haut (1 a) et latérale d'un système selon une réalisation, le volet étant en configuration d'utilisation,
- la figure 2 est une vue schématique partielle de haut du système de la figure 1, ledit système étant pourvu d'un dispositif d'actionnement selon une première réalisation, le volet étant en configuration d'utilisation,
- les figures 3 sont des vues en perspective du système de la figure 2, le volet étant en configuration d'utilisation (3a) et en configuration repliée (3b),
- la figure 4 est une vue de détail en perspective de la réalisation figure 1 zoomant sur un dispositif d'actionnement selon une deuxième réalisation,
- les figures 5 sont des vues de détail latérales du dispositif de la réalisation de la figure 4, le volet étant en configuration d'utilisation (5a), semi repliée (5b) et repliée (5c),
- la figure 6 est une vue de haut du dispositif de la figure 4 montrant le moyen d'emboitement de la roue avant déboité de la charnière.

En référence aux figures, on décrit un système 1 de recouvrement d'un compartiment à bagages de véhicule automobile, ledit système comprenant une tablette 2 de recouvrement et deux ébénisteries 3 latérales de réception amovible de ladite tablette, ladite tablette comprenant au moins un volet 4 relevable en rotation selon son bord avant 5 entre une configuration d'utilisation, où il est sensiblement horizontal, et une configuration repliée permettant un accès facilité aux bagages, l'une desdites ébénisteries étant pourvue d'un dispositif 6 d'actionnement en rotation dudit volet dans un sens ou dans l'autre, ledit dispositif comprenant un moteur 7 électrique, ledit dispositif :
- étant localisé en zone de réception d'un coin avant 8 dudit volet,
- étant agencé pour s'emboiter sur ladite tablette, quand elle est montée sur lesdites ébénisteries, de façon à pouvoir actionner en rotation ledit volet.

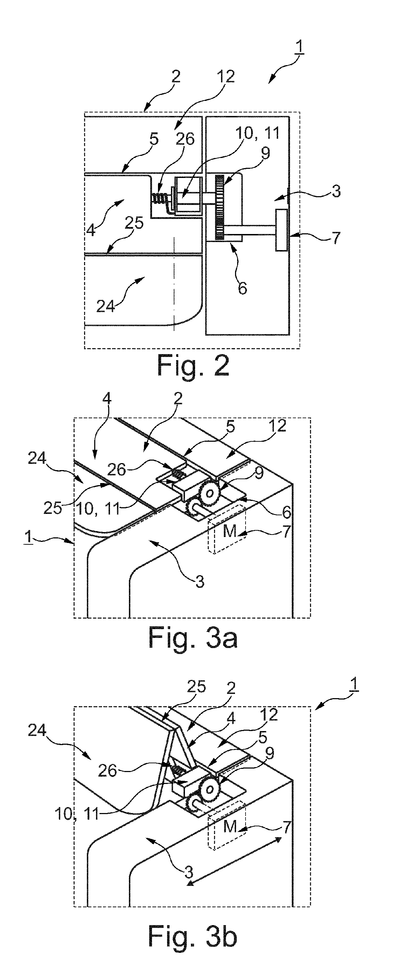

Comme visualisé notamment en figures 2,3, 4 et 6 le dispositif 6 d'actionnement comprend une roue dentée 9 de démultiplication du mouvement du moteur 7.

Selon la réalisation schématique représentée en figures 2 et 3, un moyen d'emboitement 10 est prévu sur la roue de démultiplication 9 pour coopérer avec un moyen réciproque 11 disposé en coin avant 8 du volet 4.

Le moyen réciproque 11 est ici monté sur ressort 26, de manière à pouvoir être déboité du moyen 10 lorsque l'on souhaite démonter la tablette 2.

Un tel agencement est particulièrement adapté à une tablette 2 dans laquelle le volet 4 en configuration repliée est disposé de façon sensiblement verticale.

Dans ce type de réalisation, ou le volet 4 effectue un quart de tour pour passer en configuration repliée, une charnière à un seul axe de rotation est suffisante pour réaliser l'articulation entre le volet 4 et un panneau 12 disposé devant ledit volet.

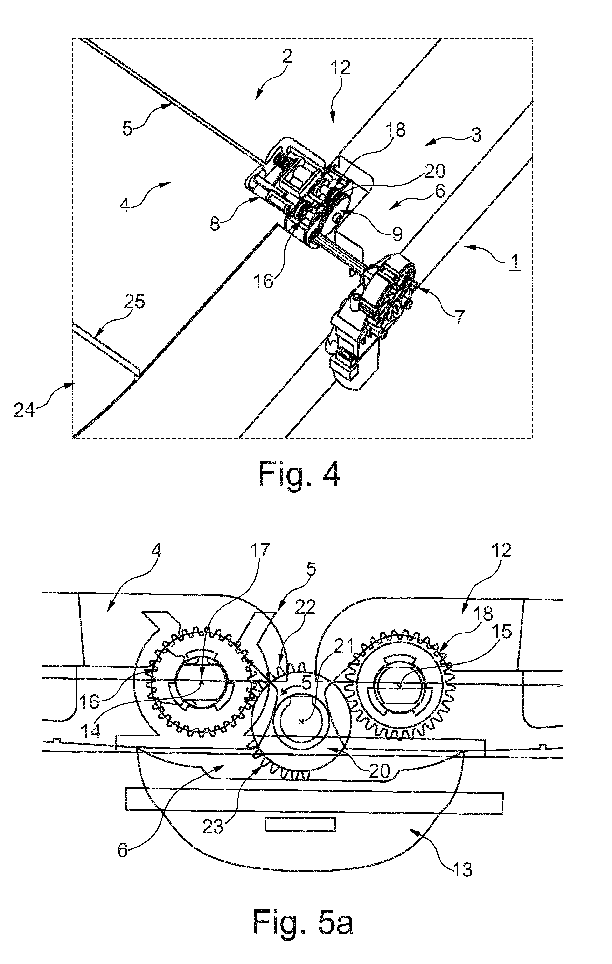

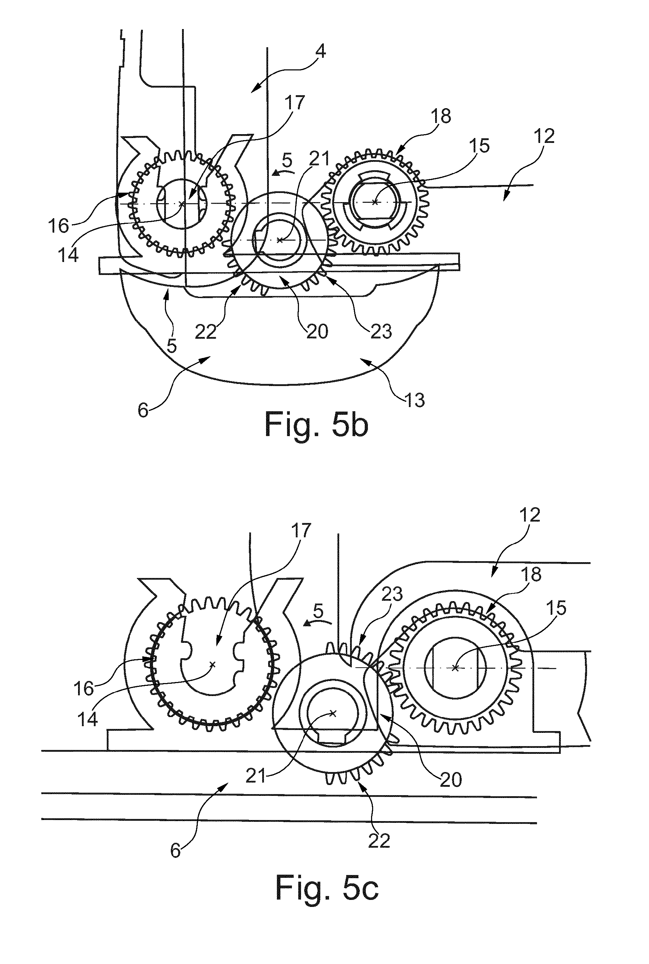

Selon la réalisation représentée en figures 4 à 6, la tablette 2 comprend :
- un panneau 12 horizontal avant relié au bord avant 5 du volet 4,
- une charnière 13 de liaison dudit volet sur ledit panneau, ladite charnière comprenant deux axes respectifs arrière 14 et avant 15 transversaux de rotation,
ledit volet passant successivement lors de son repliement :
- par une première phase de repliement depuis sa configuration d'utilisation vers une configuration semi-repliée, où il est sensiblement vertical, par rotation dudit volet autour dudit axe arrière,
- par une deuxième phase de repliement depuis sa configuration semi-repliée vers sa configuration repliée, où il est rabattu contre ledit panneau, par rotation de ladite charnière autour dudit axe avant s'accompagnant d'un relèvement dudit axe arrière,
le dispositif d'actionnement comprenant :
- une roue dentée arrière 16, l'axe de ladite roue étant confondu avec ledit axe arrière et ledit volet s'emboitant sur un moyen d'emboitement 17 prévu sur ladite roue arrière lorsque ledit volet est dans sa première phase de repliement, de sorte que ledit volet soit solidaire en rotation de ladite roue arrière, ledit volet se déboitant de ladite roue arrière lors de sa deuxième phase de repliement,
- une roue dentée avant 18 montée en rotation selon ledit axe avant, ladite charnière s'emboitant sur un moyen d'emboitement 19 prévu sur ladite roue avant, de sorte que ladite charnière soit solidaire en rotation de ladite roue avant,
- une roue dentée principale 20 montée selon un axe transversal principal 21, ladite roue principale comprenant un premier 22 et un deuxième 23 secteur angulaire denté contigus, l'ensemble desdites roues étant disposé de sorte que ledit premier - respectivement deuxième - secteur angulaire puisse engrener avec ladite roue arrière - respectivement avant -,
lesdits secteurs angulaires étant disposés de sorte que :
- une rotation dudit axe principal dans un sens prédéterminé S provoque pendant la première phase un engrènement entre ladite roue arrière et ledit premier secteur,
- une rotation complémentaire dudit axe principal dans le même sens provoque pendant la deuxième phase un engrènement entre ladite roue avant et ledit deuxième secteur.

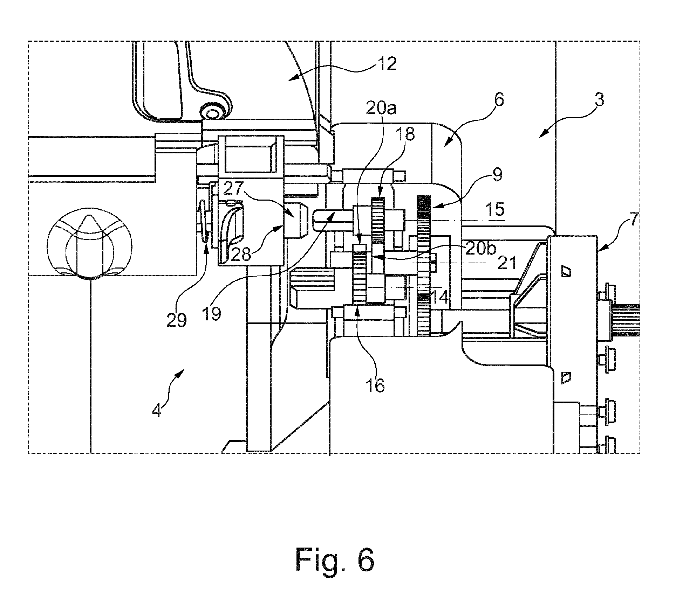

Comme on le voit sur la figure 6, la charnière 13 présente une pièce intermédiaire 28 pourvue d'un logement 27 s'emboitant avec le moyen d'emboitement 19 de la roue avant 18, ledit moyen étant sous la forme d'un doigt à section carrée.

La pièce intermédiaire est montée sur ressort 29, de sorte que le moyen 19 puisse être déboité du logement 27 lorsque l'on souhaite démonter la tablette 2.

Bien entendu, l'actionnement de l'axe principal 21 en sens inverse du sens prédéterminé S réalise un passage du volet 4 de sa configuration repliée à sa configuration d'utilisation avec les phases se déroulant en sens inverse de celui décrit plus haut.

Selon la réalisation représentée, les secteurs angulaires 22,23 sont décalés axialement, la roue principale 20 se séparant ici en deux roues élémentaires 20a,20b décalées axialement.

Il est observé qu'un tel agencement permet notamment d'assurer une meilleure « fluidité » de fonctionnement du système 1, sans à-coups.

Selon les réalisations représentées, le système 1 comprend en outre un volet annexe 24 articulé transversalement au bord arrière 25 du volet 4 de manière à permettre un pliage en accordéon de la tablette 2.

## Revendications

1. Système (1) de recouvrement d'un compartiment à bagages de véhicule automobile, ledit système comprenant une tablette (2) de recouvrement et deux ébénisteries (3) latérales de réception amovible de ladite tablette, ladite tablette comprenant au moins un volet (4) relevable en rotation selon son bord avant (5) entre une configuration d'utilisation, où il est sensiblement horizontal, et une configuration repliée permettant un accès facilité aux bagages, l'une desdites ébénisteries étant pourvue d'un dispositif (6) d'actionnement en rotation dudit volet dans un sens ou dans l'autre, ledit dispositif comprenant un moteur (7) électrique, ledit système étant **caractérisé en ce que** ledit dispositif :
• est localisé en zone de réception d'un coin avant (8) dudit volet,
• est agencé pour s'emboiter sur ladite tablette, quand elle est montée sur lesdites ébénisteries, de façon à pouvoir actionner en rotation ledit volet.

2. Système selon la revendication 1, caractérisé que le dispositif (6) d'actionnement comprend une roue dentée (9) de démultiplication du mouvement du moteur (7).

3. Système selon la revendication 2, **caractérisé en ce qu'**un moyen d'emboitement (10) est prévu sur la roue de démultiplication (9) pour coopérer avec un moyen réciproque (11) disposé en coin avant (8) du volet (4).

4. Système selon l'une des revendications 1 ou 2, **caractérisé en ce que** la tablette (2) comprend :
• un panneau (12) horizontal avant relié au bord avant (5) du volet (4),
• une charnière (13) de liaison dudit volet sur ledit panneau, ladite charnière comprenant deux axes respectifs arrière (14) et avant (15) transversaux de rotation,
ledit volet passant successivement lors de son repliement :
• par une première phase de repliement depuis sa configuration d'utilisation vers une configuration semi-repliée, où il est sensiblement vertical, par rotation dudit volet autour dudit axe arrière,
• par une deuxième phase de repliement depuis sa configuration semi-repliée vers sa configuration repliée, où il est rabattu contre ledit panneau, par rotation de ladite charnière autour dudit axe avant s'accompagnant d'un relèvement dudit axe arrière,
le dispositif (6) d'actionnement comprenant :
• une roue dentée arrière (16), l'axe de ladite roue étant confondu avec ledit axe arrière et ledit volet s'emboitant sur un moyen d'emboitement (17) prévu sur ladite roue arrière lorsque ledit volet est dans sa première phase de repliement, de sorte que ledit volet soit solidaire en rotation de ladite roue arrière, ledit volet se déboitant de ladite roue arrière lors de sa deuxième phase de repliement,
• une roue dentée avant (18) montée en rotation selon ledit axe avant, ladite charnière s'emboitant sur un moyen d'emboitement (19) prévu sur ladite roue avant, de sorte que ladite charnière soit solidaire en rotation de ladite roue avant,
• une roue dentée principale (20) montée selon un axe transversal principal (21), ladite roue principale comprenant un premier (22) et un deuxième (23) secteur angulaire denté contigus, l'ensemble desdites roues étant disposé de sorte que ledit premier - respectivement deuxième - secteur angulaire puisse engrener avec ladite roue arrière - respectivement avant -,
lesdits secteurs angulaires étant disposés de sorte que :
• une rotation dudit axe principal dans un sens prédéterminé (S) provoque pendant la première phase un engrènement entre ladite roue arrière et ledit premier secteur,
• une rotation complémentaire dudit axe principal dans le même sens provoque pendant la deuxième phase un engrènement entre ladite roue avant et ledit deuxième secteur.

5. Système selon la revendication 4, **caractérisé en ce que** les secteurs angulaires (22,23) sont décalés axialement.

6. Système selon l'une quelconque des revendications 1 à 5, **caractérisé en ce qu'**il comprend en outre un volet annexe (24) articulé transversalement au bord arrière (25) du volet (4), de manière à permettre un pliage en accordéon de la tablette (2)
